# EUROPÄISCHE PATENTSCHRIFT

(11) **EP 2 894 121 B1**
(45) Veröffentlichungstag und Bekanntmachung des Hinweises auf die Patenterteilung: **07.07.2021**
(21) Anmeldenummer: 14199256.0
(22) Anmeldetag: 19.12.2014
(51) Int. Cl.: B66C 19/00, B66C 13/18, B66C 13/22, F02G 5/02, F01K 23/06, F01K 5/02, F02B 63/04

(54) **Portalhubstapler**
Straddle carrier
Chariot cavalier

(30) Priorität: 14.01.2014 DE 202014000158 U
(43) Veröffentlichungstag der Anmeldung: 15.07.2015
(73) Patentinhaber: Konecranes Global Corporation, 05830 Hyvinkää (FI)
(72) Erfinder: Bauer, Reinhard, 97280 Remlingen (DE)
(74) Vertreter: Moser Götze & Partner Patentanwälte mbB

(56) Entgegenhaltungen:
- EP-A2- 1 925 492
- CN-U- 203 065 026
- DE-A1- 10 346 796
- US-A- 5 653 351
- US-A1- 2004 231 330
- None

## Beschreibung

Die Erfindung betrifft einen Portalhubstapler.

Portalhubstapler werden weltweit zu Tausenden in Seehäfen und Containerterminals zum Transportieren und Stapeln von Containern eingesetzt. So sind zum Beispiel in Hafenstädten wie Hamburg oder Bremerhaven hunderte solcher dieselbetriebenen Fahrzeuge im Einsatz, die Kraftstoff verbrauchen und mit ihren Abgasen die Umwelt belasten. Eine Technik, die den Energieverbrauch und Schadstoffausstoß dieser Fahrzeuge reduziert, ist sowohl ökonomisch als auch ökologisch sinnvoll.

Aus der DE 103 46 796 A1 ist ein Portalhubstapler gemäß dem Oberbegriff des Anspruchs 1 mit vermindertem Kraftstoffverbrauch bekannt. Dieser Portalhubstapler sieht ein dieselelektrisches Antriebssystem vor, bestehend aus einem Dieselmotor, der einen Generator antreibt, welcher seine erzeugte elektrische Energie über Gleichrichter in einen Gleichspannungskreis einspeist. Der Gleichspannungskreis sieht einen Energiespeicher vor, bestehend aus zusammen geschalteten Ultrakondensatoren und einem elektronischen Schalter mit einer antiparallel geschalteten Diode. An dem Gleichspannungskreis sind ebenfalls Wechselrichter angeschlossen, welche die Fahr-und Hubmotoren mit Drehstrom versorgen. Der elektronische Schalter kann so gesteuert werden, dass anfallende Bremsenergie in elektrische Energie umgewandelt und in den Ultrakondensatoren gespeichert werden kann. Dieselmotoren stoßen schädliche Abgase in großen Mengen aus. So können Abgasnormen nicht bzw. nur unter großem technischen Aufwand für die Abgasreinigung eingehalten werden.

Aus der EP 1 925 492 A2 sind Portalhubstapler bekannt, die anstelle eines Stromaggregats mit Dieselmotor eine Mikrogasturbine mit Stromgenerator vorsehen. Der Nachteil bei Mikrogasturbinen ist, dass diese nur bei sehr kleinen Leistungsschwankungen betrieben werden können. Daher ist ein Regelsystem erforderlich, welches die abgenommene Leistung, Drehzahl, Turbineneinlasstemperatur und Kraftstoffzufuhr fein aufeinander abstimmt.

Das chinesische Gebrauchsmuster CN 203 065 026 U beschreibt einen gummibereiften Portalkran (RTG), welcher einen Portalrahmen mit vertikalen Stützen aufweist. Um Container zu handhaben, weist der Portalkran einen Brückenträger mit einer Krankatze auf. In üblicher Weise ist die Krankatze mit einem Hubwerk versehen, an der ein Spreader heb- und senkbar aufgehängt ist. Der Portalkran hat einen Gasmotor.

Die US 2004/0231330 A1 beschreibt ein Hybridfahrzeug mit einem internen Verbrennungsmotor, einem Generator und einem Rankine-Kreisprozess-System zur Rückgewinnung von Wärmeenergie aus dem Abgas.

Des Weiteren ist in der Patentschrift US 5 653 351 ein System für den Bau, das Testen, das Reparieren und das Transportieren von Flugzeugtriebwerken beschrieben. Das System besteht aus einer Bearbeitungszelle und einem Spezial-Transporter für Flugzeugtriebwerke. Die Bearbeitungszelle ist im Wesentlichen als stationäres und portalartiges Gestell mit horizontalen Querträgern und mit vertikalen Stützen ausgebildet, an dem das Flugzeugtriebwerk über einen Zwischenadapter aufgehängt ist. Der Spezial-Transporter ist ebenfalls portalartig ausgebildet und von den Abmessungen so ausgestaltet, dass dieser in das portalartige Gestell der Bearbeitungszelle einfahren kann, um dort ein Teil der Bearbeitungszelle mit oder ohne Flugzeugtriebwerk aufzunehmen, zu versetzen und wieder abzusetzen. Es ist auch vorgesehen, dass von dem Spezial-Transporter nur der Zwischenadapter mit dem Flugzeugtriebwerk verfahren wird. Um das Flugzeugtriebwerk, den Zwischenadapter und den Teil der Bearbeitungszelle anheben und absetzten zu können, sind an dem Spezial-Transporter vertikal ausfahrbare Stützen angeordnet, über die der gesamte Spezial-Transporter einschließlich seiner luftbereiften Räder angehoben wird. Der Spezial-Transporter ist über einen Gasmotor angetrieben, der auch einen Stromgenerator antreibt. Über den Stromgenerator erfolgt ein elektrischer Antrieb der vertikal ausfahrbaren Stützen.

Aufgabe der vorliegenden Erfindung ist es, die bekannten Nachteile aus dem Stand der Technik zu beseitigen und ein emissionsarmes und kraftstoffsparendes Antriebssystem für Portalhubstapler bereitzustellen.

Die Aufgabe wird von einem Portalhubstapler mit den Merkmalen des Anspruch 1 gelöst. Den Unteransprüchen sind weitere vorteilhafte Ausführungsformen des Portalhubstaplers zu entnehmen.

Der erfindungsgemäße Portalhubstapler umfasst einen an Portalrahmen des Portalhubstaplers geführten, vertikal verlagerbaren Spreader, mindestens einen elektrischen Antriebsmotor und ein erstes Aggregat zum Erzeugen elektrischer Primär-Energie für den Betrieb des mindestens einen elektrischen Antriebsmotors, wobei das erste Aggregat einen Verbrennungsmotor und einen mit dem Verbrennungsmotor verbundenen Stromgenerator umfasst. Der Verbrennungsmotor ist als Gasmotor ausgebildet und der Portalhubstapler weist eine elektronische Steuereinheit zum Steuern der Energieflüsse auf und ein erster Wechselrichter des ersten Aggregats steht über einen Feldbus mit der elektronischen Steuereinheit in Kommunikationsverbindung.

Als Gasmotor im Sinne dieser Anmeldung ist ein Verbrennungsmotor zu verstehen, der eine nach dem Otto-Prozess arbeitende Verbrennungskraftmaschine ist, wobei gasförmiger Kraftstoff wie beispielsweise Erdgas, Flüssiggas, Holzgas, Biogas, Deponiegas, Grubengas, Gichtgas oder Wasserstoff verwendet wird. Als Gasmotor wird aber auch eine Gasturbine verstanden, die insbesondere einen Verdichter, eine Brennkammer und eine Turbine oder einen Expander aufweist. Eine derartige Gasturbine beruht auf dem Wirkungsprinzip des Kreisprozesses. In mindestens einer Verdichterstufe wird Luft mit einem Gas zu einem Verbrennungsgemisch und in der Brennkammer gezündet und verbrannt.

Das durch die Verbrennung entstandene Heißgas wird in einem Turbinenteil entspannt, sodass thermische Energie in mechanische Energie umgewandelt werden kann. Wesentlich ist also, dass Energie aus einem Verbrennungsprozess, zu dem zumindest anteilig Gas eingesetzt wird, in mechanische Energie umgewandelt wird. Die mechanische Energie kann anschließend einem Generator zugeführt werden, um elektrische Primär-Energie zu erzeugen. Dieser Gasmotor steht in Wirkverbindung mit einem Stromgenerator, der die erzeugte Energie des Gasmotors in elektrische Primär-Energie umwandelt. Dieser Erfindung liegt die Erkenntnis zugrunde, dass durch die Verwendung eines Gasmotors die Kraftstoffkosten und die Abgasemissionen gegenüber bekannten dieselelektrischen Fahrzeugen reduziert sind.

Ein Portalhubstapler nach Anspruch 2 ermöglicht einen besonders umweltfreundlichen Betrieb des Portalhubstaplers durch die Verwendung von tiefkalten Flüssiggas, insbesondere flüssigem Erdgas, auch LNG (Liquid Natural Gas) genannt, als Kühlmittel.

Ein Portalhubstapler nach Anspruch 3 ermöglicht die effektive Rückführung von in dem Wärmetauscher oder in dem Kondensator verdampftem Flüssiggas zu dem Gasmotor. Vorteilhafterweise wird die Abwärme des erste Aggregats und/oder eines zweiten Aggregats genutzt, um Flüssiggas zu verdampfen. Verdampftes Flüssiggas dient als Treibstoff zum Verbrennen in dem Gasmotor.

Ein Portalhubstapler nach Anspruch 4, bei dem mindestens einer der Antriebsmotoren als Fahrantriebsmotor und/oder als Hubantriebsmotor ausgebildet ist, ermöglicht einen ausschließlich elektrischen Betrieb des Portalhubstaplers.

Ein Portalhubstapler nach Anspruch 5 ermöglicht eine alternative Ausführungsform des Portalhubstaplers, der neben einem ersten Aggregat zum Erzeugen elektrischer Primär-Energie ein zweites Aggregat zum Erzeugen elektrischer Sekundär-Energie aufweist. Das zweite Aggregat ist derart ausgebildet, dass durch Nachverstromen der Abwärme des ersten Aggregats, Sekundär-Energie bereitgestellt wird. Hierbei wird der erzeugte Abwärmestrom des ersten Aggregats, im Wesentlichen erzeugt durch den als Gasmotor ausgebildeten Verbrennungsmotor und dem verbundenen Generator, genutzt, um elektrische Sekundär-Energie bereitzustellen und diesen nicht ungenutzt in die Umwelt auszustoßen. Hierdurch wird der Wirkungsgrad des Antriebs für den Portalhubstapler erhöht. Hierdurch werden der Kraftstoffverbrauch und infolge dessen auch der Abgasausstoß reduziert.

Ein Portalhubstapler nach Anspruch 6 gewährleistet eine unkomplizierte Integration des zweiten Aggregats an dem Portalhubstapler. Ein Wärmetauscher dient zum Einkoppeln der Abwärme des ersten Aggregats in das zweite Aggregat.

Ein Portalhubstapler nach Anspruch 7 ermöglicht ein thermodynamisches Kreislaufsystem, bei dem eine Förderpumpe das kondensierte Arbeitsmedium von einem Kondensator über den Wärmetauscher, in dem das Arbeitsmedium verdampft, zu der Entspannungsmaschine fördert.

Ein Portalhubstapler nach Anspruch 8 weist durch die Verwendung von Helium und/oder Stickstoff im Arbeitsmedium des thermodynamischen Kreislaufsystems einen effizienten Wärmeaustausch in dem Wärmetauscher und dem Kondensator auf. Hierdurch wird der Wirkungsgrad bei der Nachverstromung um mindestens 50%, insbesondere um mindestens 60% und insbesondere um mindestens 62,5% erhöht.

Ein Portalhubstapler nach Anspruch 9 ermöglicht eine reduzierte Baugröße des zweiten Aggregats. Durch die Verwendung eines Schmierstoffabscheiders, insbesondere in Form eines Ölabscheiders, der Öltröpfchen in einem Arbeitsmedium unter Hochdruck abscheidet und diese den Schmierstellen der Entspannungsmaschine zuführt, ist es möglich insbesondere auf eine Schmiermittelpumpe zu verzichten.

Ein Portalhubstapler nach Anspruch 10 ermöglicht das Speichern von elektrischer Energie, die nicht von den elektrischen Antriebsmotoren benötigt wird. Dadurch wird das erste Aggregat gleichmäßig ausgelastet. Die dadurch erzeugte Abwärme fällt gleichmäßig an. Hierdurch kann das zweite Aggregat in einem Betriebspunkt mit gutem Wirkungsgrad betrieben werden. Ein derartiger Portalhubstapler kann effektiv betrieben werden.

Ein Portalhubstapler nach Anspruch 11 ermöglicht eine effiziente und zielgerichtete Steuerung und Überwachung eines Energiespeichers. Dadurch ist ein effektives Energiemanagement an dem Portalhubstapler gewährleistet. Insbesondere kann ausgeschlossen werden, dass ein Energiespeicher unbeabsichtigt überladen oder vollständig entladen wird.

Ein erfindungsgemäßer Portalhubstapler ermöglicht eine intelligente Steuerung des Energiemanagements des Portalhubstaplers.

Ein erfindungsgemäßer Portalhubstapler ermöglicht eine schnelle und direkte Kommunikationsverbindung zwischen dem ersten Aggregat und einer elektronischen Fahrzeugsteuerung.

Ein Portalhubstapler nach Anspruch 12 ermöglicht eine schnelle und direkte Kommunikationsverbindung zwischen dem zweiten Aggregat und einer elektronischen Fahrzeugsteuerung.

Ein Portalhubstapler nach Anspruch 13 ermöglicht eine vorteilhafte Zentralversorgung mehrerer an einem Feldbus angeschlossener elektrischer Antriebe, insbesondere mindestens eines Fahrantriebs, mindestens eines Hubantriebs und mindestens eines Hilfsantriebs beispielsweise für eine Kühlerpumpe, einen Lüfter, ein Klimagerät oder eine Heizung. Insbesondere ermöglicht ein derartiger Portalhubstapler eine zentrale Steuerung aller Energieverbraucher und Energieerzeuger mittels einer elektronischen Fahrzeugsteuerung.

Ausführungsbeispiele der Erfindung werden nachfolgend anhand der Figuren näher erläutert. In dieser zeigen:
Fig. 1 eine schematische Darstellung eines erfindungsgemäßen Portalhubstaplers,
Fig. 2 ein schematisches Schaltbild eines Portalhubstapler gemäß einem ersten Ausführungsbeispiel,
Fig. 3 ein schematisches Schaltbild eines Portalhubstapler gemäß einem zweiten Ausführungsbeispiel mit einem zweiten Aggregat als ORC-Maschine,
Fig. 4 eine Fig. 3 entsprechendes Schaltbild mit dem zweiten Aggregats als ETC-System und
Fig. 5 ein Wirkschaltbild eines Powermanagement-Systems des erfindungsgemäßen Portalhubstaplers.

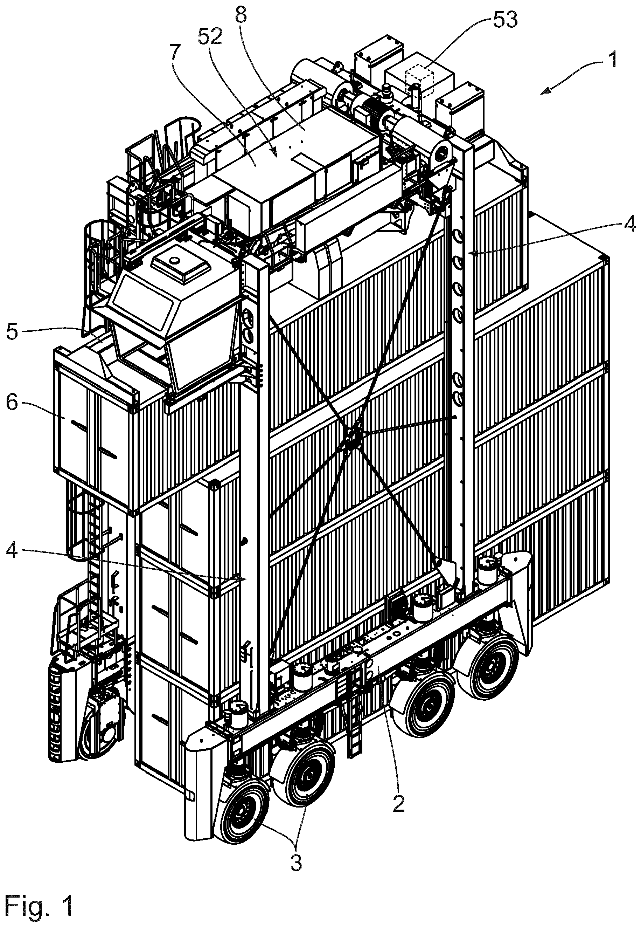

Ein in Fig. 1 dargestellter Portalhubstapler 1 umfasst zwei entlang einer Fahrrichtung orientierte Fahrwerksträger 2, an welchen jeweils vier Einzelräder 3 angeordnet sind. Die Fahrwerksträger 2 sind parallel zueinander und in einer gemeinsamen horizontalen Ebene angeordnet. An einer der Räder 3 abgewandten Oberseite sind die beiden Fahrwerksträger 2 durch zwei im Wesentlichen U-förmigen Portalrahmen 4 miteinander verbunden. Die Portalrahmen 4 sind entlang der Fahrrichtung an einem vorderen Ende der Fahrwerksträger 2 und an einem hinteren Ende der Fahrwerksträger 2 angeordnet.

Der Portalhubstapler 1 weist einen an den Portalrahmen 4 geführten vertikal verlagerbaren Spreader 5 auf. Der Spreader 5 dient zum Handhaben eines Frachtcontainers 6. Der Portalhubstapler 1 und insbesondere der Portahlrahmen 4 sind derart ausgebildet, dass der Portalhubstapler 1 mit einem gehobenen Container 6 am Boden gestapelte Container 6 überfahren kann.

Zur Erzeugung elektrischer Primär-Energie, die für das Betreiben des Portalhubstaplers 1 erforderlich ist, ist ein erstes Aggregat 52 vorgesehen. Das erste Aggregat 52 ist gemäß dem gezeigten Ausführungsbeispiel oberhalb einer von den beiden Portalrahmen 4 definierten Oberseite angeordnet. Das erste Aggregat 52 umfasst ein Verbrennungsmotor 7 in Form eines Gasmotors und einem damit verbundenen Generator 8 zum Umwandeln von dem Gasmotor 7 erzeugter Energie in elektrische Primär-Energie. Weiterhin ist ein rein schematisch dargestelltes zweites Aggregat 53 vorgesehen, das mit dem Gasmotor 7 verbunden ist. Das zweite Aggregat 53 dient zum Nachverstromen von Abwärme, die von dem ersten Aggregat 52, insbesondere des Gasmotors 7 und/oder dem Generator 8 zur Erzeugung der elektrischen Primär-Energie abgegeben wird.

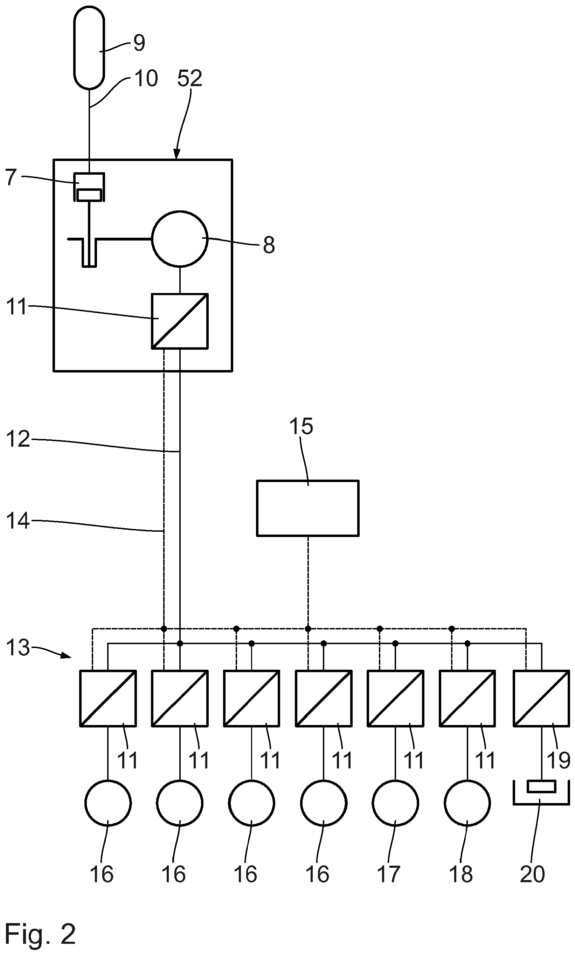

Anhand von Fig. 2 sollen Aufbau und Funktionsweise des ersten Aggregats 52 näher erläutert werden. Das erste Aggregat 52 umfasst einen Verbrennungsmotor 7 in Form eines Gasmotors und einem in Wirkverbindung stehenden Generator 8, der als Drehstromgenerator ausgebildet ist. Der Gasmotor 7 ist über eine Zuführleitung 10 mit einem Kraftstofftank 9 verbunden. Der Kraftstofftank 9 ist derart ausgebildet, dass dieser tiefkaltes Flüssiggas, insbesondere flüssiges Erdgas, auch LNG (Liquid Natural Gas) genannt, aufnehmen kann. Infolgedessen wird der Gasmotor 7 mit diesem tiefkalten Flüssiggas, insbesondere LNG betrieben. Der Drehstromgenerator 8 erzeugt Wechselstrom, der über einen im Gleichrichtmodus betriebenen Wechselrichter 11, als Gleichstrom über eine Sammelschiene 12 für den Gleichspannungszwischenkreis 13 zur Verfügung gestellt wird. Die Sammelschiene 12 ist als durchgezogene Linie dargestellt. Der Wechselrichter 11 ist zusätzlich über einen in gestrichelter Linie dargestellten Feldbus 14, der insbesondere als CAN-Bus ausgeführt ist, mit einer elektronischen Steuereinheit 15 verbunden. Die elektronische Steuereinheit 15 ermöglicht ein Leistungs- und Energiespeicher-Management. Die elektronische Steuereinheit 15 ist beispielsweise als speicherprogrammierbare Steuerung (SPS) oder als separater Rechner ausgebildet. Über den Feldbus 14 ist die elektronische Steuereinheit 15 mit weiteren Wechselrichtern 11 verbunden, die jeweils einem der Fahrantriebe 16, einem Hubantrieb 17 und jeweils einem der weiteren Hilfsantriebe 18 zugeordnet sind und diese mit elektrischer Energie aus dem Gleisspannungszwischenkreis 13 versorgen. Die Hilfsantriebe 18 sind beispielsweise Hilfsmotoren für eine Kühlerpumpe, einen Lüfter, Klimageräte und/oder Heizungsgeräte an dem Portalhubstapler 1. Die Wechselrichter 11 sind entsprechend über die Sammelschiene 12 des Gleichspannungszwischenkreises 13 miteinander verbunden.

Weiter ist ein Lade-/Entladeregler 19 über die Sammelschiene 12 des Gleichstromzwischenkreises 13 mit dem Wechselrichter 11 verbunden. Der Lade-/Entladeregler 19 dient zum Steuern und Überwachen eines Energiespeichers 20. Der Energiespeicher 20 kann beispielsweise aus Doppelschicht-Kondensatoren, als Batterien oder als Schwungscheibenspeicher ausgeführt sein. Der Energiespeicher 20 ermöglicht, dass überschüssige elektrische Energie gespeichert werden kann. Dadurch ist es möglich, dass der Gasmotor 7 im Wesentlichen mit konstanter Drehzahl betrieben wird und so über den Stromgenerator 8 im Wesentlichen konstante elektrische Primär-Energie in dem Gleichspannungszwischenkreis 13 eingespeist werden kann.

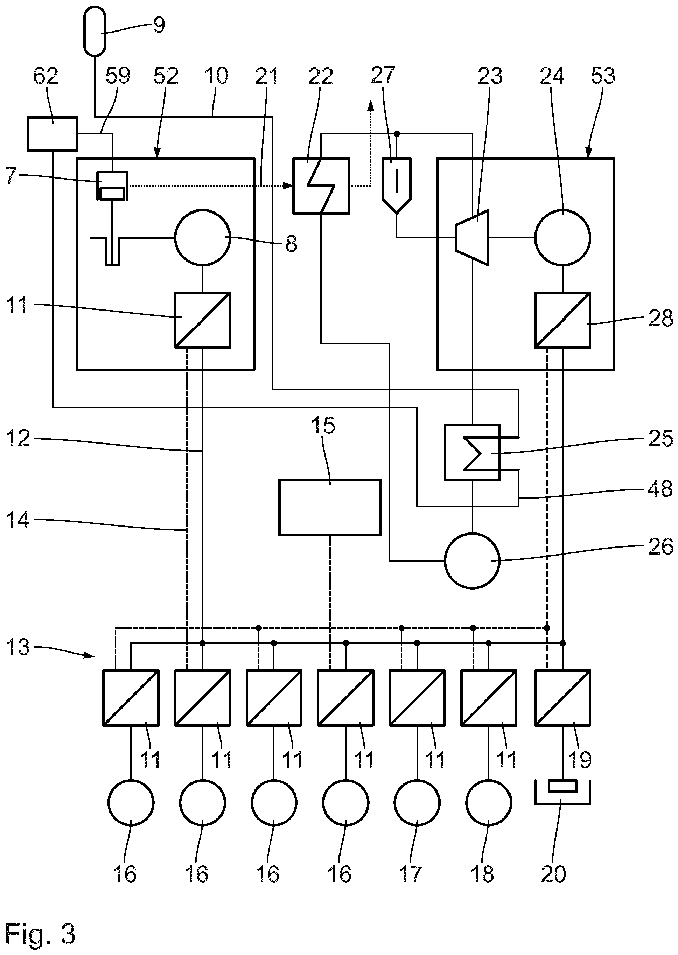

In Fig. 3 ist eine besonders vorteilhafte Ausführungsform des Portalhubstaplers 1 dargestellt. Komponenten die aus den Figuren 1 und 2 bekannt sind, tragen die gleichen Bezugsziffern und werden nicht nochmals im Einzelnen diskutiert.

In dieser Ausführungsform ist ein zweites Aggregat 53 mit einem thermodynamischen Kreislaufsystem zum Nachverstromen der Abwärme des ersten Aggregats 52 angeschlossen. Das zweite Aggregat 53 ist als ORC-Maschine ausgeführt. Durch den Betrieb des ersten Aggregats 52, insbesondere durch den Betrieb des Gasmotors 7, wird Abwärme produziert, die als Abwärmestrom durch eine gepunktete Linie 21 dargestellt ist. Der Abwärmestrom 21 des Gasmotors 7 wird einem Wärmetauscher 22 zugeführt, der insbesondere als Verdampfer ausgeführt ist. Der Wärmetauscher 22 ist Teil eines thermodynamischen Kreislaufsystems, insbesondere eines geschlossenen Gasturbinenprozesssystems, welches weiter eine Entspannungsmaschine 23 mit einem in Wirkverbindung stehenden Stromgenerator 24, einem mit der Spannungsmaschine 23 verbundenen Kondensator 25 zum Verflüssigen eines Arbeitsmediums, sowie eine nachstehende Förderpumpe 26 zum Fördern des Arbeitsmediums vom Kondensator 25 zu dem Wärmetauscher 22 aufweist. In dem Wärmetauscher 22 wird das flüssige Arbeitsmedium in Folge des eingeleiteten Abwärmestroms 21 verdampft.

In dem Wärmetauscher 22 wird das flüssige Arbeitsmedium infolge des eingeleiteten Abwärmestroms 21 verdampft. Hierdurch wird die Entspannungsmaschine 23 angetrieben, die wiederum den Stromgenerator 24 antreibt. Die Entspannungsmaschine 23 kann insbesondere als Dampfschraubenmotor, Flügelzellenmotor, Kolbendampfmotor oder Turbine ausgebildet sein. Der Stromgenerator 24 kann als Synchron- oder Asynchrongenerator ausgebildet sein. Der von dem Stromgenerator 24 erzeugte Wechsel- oder Drehstrom wird von einem regelbaren Wechselrichter 28 gleichgerichtet und in den Gleichstromzwischenkreis 13 über die Sammelschiene 12 eingespeist.

Der Kondensator 25 ist über eine Zuführleitung 10 mit dem LNG-Kraftstofftank 9 verbunden. In dieser vorteilhaften Ausführungsform weist das erste Aggregat 52 anstelle eines Dieselmotors einen Gasmotor 7 auf, der mit tiefkaltem Flüssiggas, insbesondere flüssigem Erdgas (LNG), betrieben wird. Des Weiteren ist der LNG-Tank 9 über die Zuführleitung 10 mit dem Kondensator 25 verbunden ist. Der Kondensator 25 ist über eine Gasleitung 48 mit einem Gasmischer 62 verbunden. Der Gasmischer 62 ist über eine weitere Gasleitung 59 mit dem Gasmotor 7 verbunden.

Das in Fig. 3 gezeigte Ausführungsbeispiel ermöglicht es, dass das Flüssigerdgas zum Verflüssigen des Arbeitsmediums in dem Kondensator 25 verwendet wird. Vorteilhaft an dieser Ausführungsform ist, dass das Flüssigerdgas (LNG) zunächst als Kühlmittel zum Verflüssigen des Arbeitsfluids in dem Kondensator 25 dient. Durch die Wärmeaufnahme des LNG im Kondensator 25 wird das LNG verdampft. Der Kondensator 25 dient als Verdampfer. Von dem Kondensator 25 wird das verdampfte LNG in dem Gasmischer 62 gefördert. Der Gasmischer 62 befindet sich insbesondere im Ansaugtrakt des Gasmotors 7. In dem Gasmischer 62 wird das verdampfte LNG mit Luft zu einem Gas-Luft-Gemisch vermischt. Das Gas-Luft-Gemisch wird über die Gasleitung 59 dem Gasmotor 7 zur Verbrennung zugeführt. Das verdampfte LNG dient also gleichzeitig als Kraftstoff für den Gasmotor 7. Die Verdampfung des tiefkalten LNG im Kondensator 25 bewirkt somit gleichzeitig eine Abkühlung und Verflüssigung des Arbeitsmediums in der ORC-Anlage 9. Der Kondensator 25 ist ein Wärmetauscher.

Es ist besonders vorteilhaft, wenn das Arbeitsmedium im Kondensator beispielsweise aus Helium und/oder Stickstoff besteht und somit das zweite Aggregat, also die ORC-Anlage 9 in einem geschlossenen Gasturbinenprozess betrieben werden kann, bei dem das Arbeitsmedium als Gas nicht verflüssigt wird. In diesem Fall ist anstelle des Kondensators 25 ein zweiter Wärmetauscher vorgesehen, der das Arbeitsmedium kühlt und dadurch das LNG verdampft. Durch den hohen Temperaturunterschied zwischen der Abwärme 21 des Gasmotors 7 im ersten Wärmetauscher 22 einerseits und dem tiefkalten LNG im zweiten Wärmetauscher 25 andererseits wird ein deutlich höherer Wirkungsgrad von vorzugsweise 52 % gegenüber dem üblichen Wirkungsgrad von ca. 32 % erreicht. Hierdurch wird weiter Kraftstoff eingespart und die CO2-Emissionen gesenkt.

Weiterhin kann ein Ölabscheider 27 vorgesehen sein, der zwischen dem Wärmetauscher 22 und der Entspannungsmaschine 23 angeordnet ist. Sofern Schmiermittel im Arbeitsmedium enthalten ist, liegt das Schmiermittel hinter dem Wärmetauscher 22 in Form von feinen Öltröpfchen in dem gasförmigen Arbeitsmedium vor. Unter Hochdruckbedingung können diese Öltröpfchen teilweise abgeschieden werden. Die abgeschiedenen Öltröpfchen werden wiederum als Schmiermittel für die Schmierstellen der Entspannungsmaschine 23 verwendet. Das Schmiermittel wird unter Hochdruck in Schmierstellen der Entspannungsmaschine 23 zugeführt. Hierdurch kann insbesondere auf eine Schmiermittelpumpe an der Entspannungsmaschine verzichtet werden. Dadurch ist eine kompakte Bauweise des zweiten Aggregats möglich.

Die von einem zweiten Stromgenerator 24 erzeugte und über ein regelbaren Wechselrichter 28 eingespeiste elektrische Sekundär-Energie wird vorzugsweise für die Fahrantriebe 16 bzw. Hubantriebe 17 verwendet. Alternativ ist es möglich, dass der zweite Stromgenerator 24 beispielsweise ein Bordnetz mit Drehstrom für die Hilfsantriebe 18 speist. Hierfür ist ein geeigneter Sequenzumrichter notwendig. Der regelbare Wechselrichter 28 ermöglicht eine Regelung der Ausgangsspannung bzw. der Ausgangsstromstärke, für den Gleichspannungszwischenkreis 13, auf die geforderten Sollwerte. Diese Sollwerte können vorzugsweise von der elektronischen Steuereinheit 15 vorgegeben werden und über den Feldbus 14 an den regelbaren Wechselrichter 28 übermittelt werden.

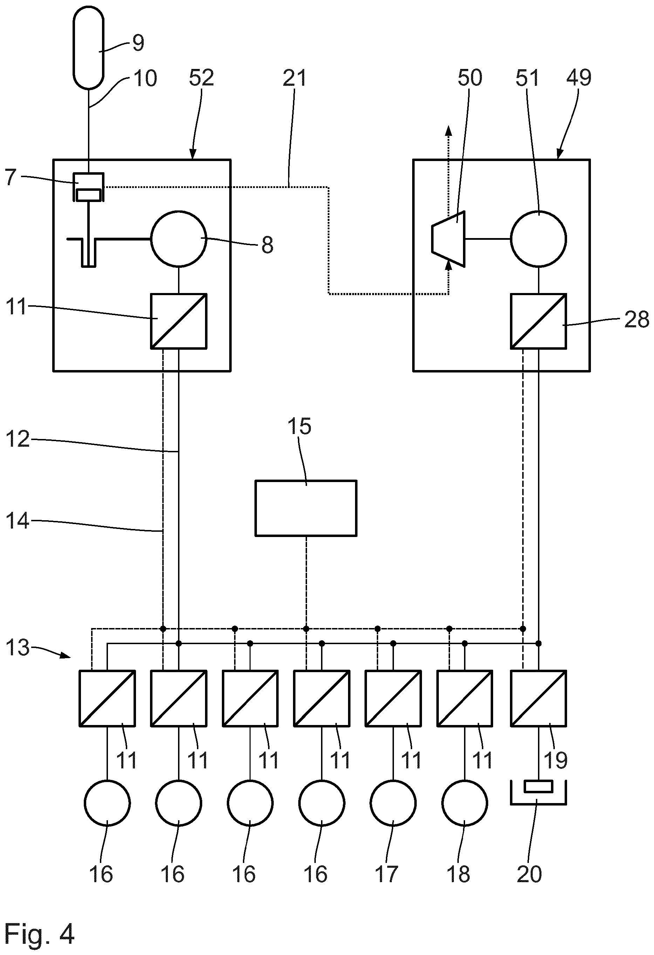

Fig. 4 zeigt eine weitere Ausführungsform eines zweiten Aggregats 49 in Form eines Electrical Turbo Compound (ETC-) System in dem Portalhubstapler 1. Komponenten die aus den vorgehenden Figuren 1 bis 3 bekannt sind, tragen die gleichen Bezugsziffern und werden nicht nochmals diskutiert.

Ein ETC-System entspricht im Wesentlichen einem Stromgenerator mit einer hohen Drehzahl. Bei dieser Anordnung ist kein thermodynamisches Kreislaufsystem mit einem Wärmetauscher, einem Ölabscheider und Förderpumpe erforderlich, so ist eine besonders platzsparende Bauweise des zweiten Aggregats 49 möglich. Der Abgasstrom 21 des Gasmotors 7 wird direkt über eine Abgasturbine 50 geleitet, die in Wirkverbindung mit einem Stromgenerator 51 steht. Alternativ kann die Abgasturbine 50 direkt nach einem nicht dargestellten Abgasturboladers des Gasmotors7, angeordnet sein. In einer weiteren alternativen Ausführungsform kann auf die Abgasturbine 50 verzichtet werden und der Stromgenerator 51 steht in direkter Wirkverbindung mit dem Abgasturbolader. Durch die Verwendung eines Generators, der bei hohen Antriebsdrehzahlen von beispielsweise 2000 U/Minuten bis 100000 U/Minuten betrieben werden kann, kann auf ein Zwischengetriebe an der Welle der Abgasturbine bzw. des Abgasturboladers verzichtet werden. Hierdurch kann das zweite Aggregat 49 besonders leicht und kompakt ausgeführt werden.

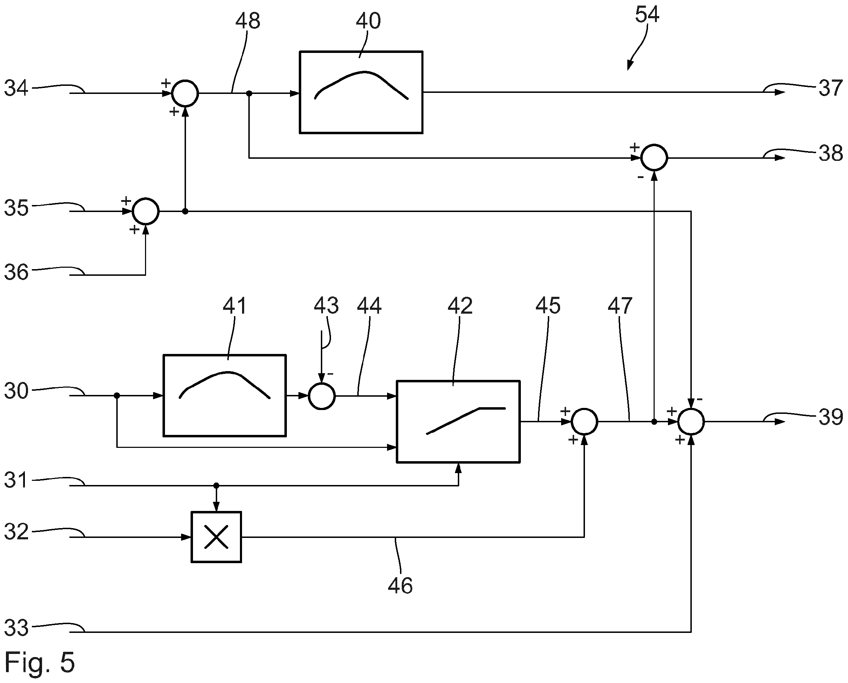

Im Folgenden wird anhand von Fig. 5 ein Regelungssystem mittels einer Powermanagement-Software zur Steuerung und Regelung des erfindungsgemäßen Portalhubstaplers 1 näher erläutert. Dem als Ganzes mit 54 bezeichneten Reglungssystem, das insbesondere in der Steuereinheit 15 integriert ist, werden Eingangssignale 30, 31, 32, 33 über den Feldbus 14 zur Verfügung gestellt. Diese Eingangssignale 30, 31, 32, 33 sind Istwerte von Regelelektroniken der einzelnen Wechselrichter 11, 19 und 28 sowie des ersten Aggregats 52 und des zweiten Aggregats 53, 49. Das Eingangssignal 30 ist der Drehzahllistwert des Gasmotors 7 bzw. des Drehstromgenerators 8 des ersten Aggregats 52. Das Eingangssignal 31 ist der Istwert der Zwischenkreisspannung. Das Signal 32 ist Istwert des Einspeisestroms des zweiten Aggregats 53, 49. Das Signal 33 charakterisiert die verfügbare Speicherleistung.

Weiterhin werden Eingangssignale 34, 35 und 36 über dem Feldbus 14 zur Verfügung gestellt. Diese Eingangssignale stellen Sollwerte dar, die bei einem manuellen Betrieb des Portalhubstaplers 1 durch den Fahrer über ein Fahrpedal und einem Hubwerks-Meisterschalter oder bei Automatikbetrieb aus einer Fahrzeugleitsteuerung, einem sog. Autopiloten, erzeugt werden. Das Eingangssignal 34 charakterisiert den Sollwert der Fahrwerksleistung. Das Eingangssignal 35 ist der Sollwert der Hubwerksleistung und das Eingangssignal 36 ist der Sollwert der Hilfsantriebe.

Die Eingangssignale 30 bis 36 werden in dem Regelungssystem 45 verarbeitet und daraus Ausgangssignale 37, 38, 39 erzeugt, die über den Feldbus 14 als Sollwerte bzw. Sollwertbegrenzungswerte an die Regelelektroniken, insbesondere des Wechselrichters 11 des ersten Aggregats 52 und des zweiten Aggregats 53, 49 übermittelt werden. Das Ausgangssignal 37 stellt die Solldrehzahl für den Gasmotor 7 und/oder für den Stromgenerator 8 des ersten Aggregats 52 dar. Das Ausgangssignal 38 charakterisiert das Soll-Signal für eine geforderte Speicherleistung. Das Ausgangssignal 39 ist ein Sollwert für eine Leitungsbegrenzung des Fahrwerks.

Vorzugsweise werden die Eingangssignale 30 bis 36 und die Ausgangssignale 37 bis 39 über den Feldbus 14 direkt als Leistungswerte, oder als Spannungen und Ströme, übertragen. Es ist alternativ möglich, die Signale als Drehzahlen und Drehmomente zu übertragen und diese in der Steuereinheit 15 in entsprechende Leistungen umzurechnen. Dazu weist die Steuereinheit 15 eine integrierte Recheneinheit auf.

Um aus dem Eingangssignal 30 bis 36 die Ausgangssignale 37 bis 39 zu erzeugen, sind in dem Regelungssystem 54 und insbesondere der implementierten Powermanagement-Software charakteristische, insbesondere vorab experimentell ermittelte Leistungskurven 40, 41 des ersten Aggregats 52 und des Gasmotors 7 hinterlegt. Weiterhin ist eine Leistungskurve 42 des Stromgenerators 8 hinterlegt. Die Leistungskurven 40, 41, 42 stellen den Zusammenhang zwischen Drehzahl und Leistung des ersten Aggregats 52 dar. Die Leistungskurven 40, 41 können beispielsweise verbrauchsoptimale Kurven des Gasmotors 7 sein. Sofern diese verbrauchsoptimalen Kurven nicht bekannt sind und insbesondere lediglich die von einem Hersteller des Gasmotors 7 veröffentlichten Grenzleistungskurven zur Verfügung stehen, kann diese Grenzleistungskurve als solche in die Powermanagement-Software implementiert werden. Die Powermanagement-Software ermöglicht eine Anpassung der Grenzleistungskurve mit einem gewünschten Auslastungsfaktor des Gasmotors 7, um daraus eine angepasste Leistungskurve zu berechnen.

Das Eingangssignal 30 wird einerseits direkt mit der Leistungskurve des Gasmotors 41, die eine Umkehrfunktion zu der Leistungskurve 40 darstellt, verglichen. Dass sich daraus ergebende Signal wird mit der Leistung 43 der mechanischen Nebenantriebe wie beispielsweise Hydraulikpumpen als Stellsignal beaufschlagt. Das daraus errechnete Signal stellt die verfügbare mechanische Leistung 44 an der Generatorwelle dar. Die verfügbare mechanische Leistung 44 dient als weiteres Eingangssignal neben dem Drehzahllistwert 30 für die Leistungskurve 42 des Stromgenerators 8 des ersten Aggregats 52. Daraus wird die verfügbare elektrische Leistung 45 des ersten Aggregats 52 ermittelt. Zusätzlich in dem Vergleich mit der Leistungskurve 42 des Stromgenerators 8 fließt auch die Zwischenkreisspannung 31 ein. Die Zwischenkreisspannung 31 wird zudem mit dem Einspeisestrom 32 des zweiten Aggregats 53, 49 multipliziert und daraus die verfügbare elektrische Leistung 46 des zweiten Aggregats 53, 49 errechnet. Die verfügbaren elektrischen Leistungen 45, 46 der Aggregate 52, 53, 49 werden addiert und daraus die verfügbare elektrische Gesamtleistung 47 des Gleichspannungszwischenkreises 13 berechnet. Zu der verfügbaren elektrischen Gesamtleistung 47 wird die verfügbare Speicherleistung 33 addiert und gleichzeitig die Summe der Hubwerksleistung 35 und die Leistung der Hilfsantriebe 36 subtrahiert. Daraus ergibt sich der Vollwert 39 für die Leistungsbegrenzung des Fahrwerks.

Aus den Sollwerten von Hubwerksleistung 35 und der Hilfsantriebe 36 wird mit dem Sollwert 34 der Fahrwerksleistung die geforderte Summenleistung 48 addiert und der Leistungskurve 40 des Gasmotors 7 des ersten Aggregats 52 zugeführt. Gleichzeitig wird der Summenwert 48, der der geforderten elektrischen Summenleistung entspricht, mit der verfügbaren elektrischen Gesamtleistung 47 verglichen und daraus die geforderte Speicherleistung als Ausgangssollsignal 38 berechnet. Dieses Ausgangssollsignal 38 dient insbesondere zum Boosten der Fahrwerk- und Hubwerkantriebe, wenn diese gleichzeitig Spitzenleistungen zum Beschleunigen oder Heben einer Last fordern. Das Ausgangssollsignal 38 kann auch zum Wiedergewinnen von Bremsenergie genutzt werden, wenn die Fahrwerksmotoren elektrisch bremsen und das Hubwerk eine Last absenkt. Die zum Boosten oder Rekuperieren erforderliche Speicherleistung wird als Ausgangssollsignal 38 über den Feldbus 14, dem Lade-/Entladeregler 19, des Energiespeichers 20 zugeführt. Der Lade-/Entladeregler 19 regelt einen Lade- oder Entladestrom des Energiespeichers 20 auf einen Wert, der direkt geforderten Speicherleistung gemäß Ausgangssollsignal 38 entspricht.

Aus dem Vergleich des Summenleistungssignals 48 mit der Leistungskurve 40 des Gasmotors 7 wird direkt das Ausgangssignal 37 für die Solldrehzahl des Gasmotors 7 bzw. des Stromgenerators 8 des ersten Aggregats 52 berechnet.

## Patentansprüche

1. Portalhubstapler (1) zum Transportieren und Stapeln von Containern (6) umfassend
- einen an Portalrahmen (4) des Portalhubstaplers (1) geführten, vertikal verlagerbaren Spreader (5)
- mindestens einen elektrischen Antriebsmotor (16, 17, 18) und
- ein erstes Aggregat (52) zum Erzeugen elektrischer Primär-Energie, für den mindestens einen elektrischen Antriebsmotor (16, 17, 18),
wobei das erste Aggregat (52) einen Verbrennungsmotor (7) und einen mit dem Verbrennungsmotor (7) verbundenen Stromgenerator (8) umfasst, **dadurch gekennzeichnet, dass** der Verbrennungsmotor (7) als Gasmotor ausgebildet ist und
der Portalhubstapler (1) eine elektronische Steuereinheit (15) zum Steuern der Energieflüsse aufweist und ein erster Wechselrichter (11) des ersten Aggregats (52) über einen Feldbus (14) mit der elektronischen Steuereinheit (15) in Kommunikationsverbindung steht.

2. Portalhubstapler (1) gemäß Anspruch 1, **gekennzeichnet durch** einen Kraftstofftank (9) für tiefkaltes Flüssiggas, insbesondere flüssiges Erdgas, der über eine Zuführleitung (10) mit einem Wärmetauscher (22) oder einem Kondensator (25) verbunden ist.

3. Portalhubstapler (1) gemäß Anspruch 2, **dadurch gekennzeichnet, dass** der Wärmetauscher (22) bzw. der Kondensator (25) über eine Gasleitung (48, 59), insbesondere über einen Gasmischer (62) mit dem Verbrennungsmotor (7) verbunden ist.

4. Portalhubstapler (1) gemäß einem der vorstehenden Ansprüche, **dadurch gekennzeichnet, dass** der mindestens eine elektrische Antriebsmotor (16, 17, 18) als Fahrantrieb (16) und/oder als Hubantrieb (17) ausgebildet ist.

5. Portalhubstapler (1) gemäß einem der vorstehenden Ansprüche, **gekennzeichnet durch** ein zweites Aggregat (53, 49) zum Erzeugen elektrischer Sekundär-Energie durch Nachverstromen von bei dem Erzeugen der elektrischen Primär-Energie anfallender Abwärme (21) des ersten Aggregats (52).

6. Portalhubstapler (1) gemäß Anspruch 5, **gekennzeichnet durch** einen Wärmetauscher (22) zum Einkoppeln der Abwärme des ersten Aggregats (52) in das zweite Aggregat (53).

7. Portalhubstapler (1) gemäß den Ansprüchen 5 und 6, **gekennzeichnet durch** eine Förderpumpe (26) zum Fördern von in einem Kondensator (25) kondensierten Arbeitsmedium von einer Entspannungsmaschine (23) über den Kondensator (25) zu dem Wärmetauscher (22) des zweiten Aggregats (53).

8. Portalhubstapler (1) gemäß Anspruch 7, **dadurch gekennzeichnet, dass** das zweite Aggregat (49, 53) als geschlossenes Gasturbinenprozesssystem ausgeführt ist und insbesondere als Arbeitsmedium Helium und/oder Stickstoff verwendet wird.

9. Portalhubstapler (1) gemäß den Ansprüchen 6 und 7, **gekennzeichnet durch** einen zwischen dem Wärmetauscher (22) und der Entspannungsmaschine (23) angeordneten Schmierstoffabscheider (27).

10. Portalhubstapler (1) gemäß einem der vorstehenden Ansprüche, **gekennzeichnet durch** mindestens einen Energiespeicher (20), insbesondere in Form von Doppelschichtkondensatoren, Batterien oder Stromspeichern, zum Kompensieren von Energiespitzen.

11. Portalhubstapler (1) gemäß Anspruch 10, **gekennzeichnet durch** einen Lade-/Entladeregler (19) für jeweils einen Energiespeicher (20).

12. Portalhubstapler (1) gemäß einem der Ansprüche 5 bis 11, wenn von zumindest Anspruch 5 abhängig, **dadurch**
**gekennzeichnet, dass** ein zweiter Wechselrichter (28) des zweiten Aggregats (53) über einen Feldbus (14) mit der elektronischen Steuereinheit (15) in Kommunikationsverbindung steht.

13. Portalhubstapler (1) gemäß einem der Ansprüche 1 bis 12, **dadurch gekennzeichnet, dass** mit dem Feldbus (14) mindestens ein Fahrantrieb (16), mindestens ein Hubantrieb (17) und mindestens ein Hilfsantrieb (18) in Kommunikationsverbindung stehen.

## Claims

1. Straddle carrier (1) for transporting and stacking containers (6), comprising
- a vertically movable spreader (5), guided on the portal frame (4) of the straddle carrier (1)
- at least one electrical drive motor (16, 17, 18) and
- a first power unit (52) for generating primary electrical energy for the at least one electrical drive motor (16, 17, 18), wherein the first power unit (52) comprises a combustion engine (7) and a power generator (8) connected to the combustion engine (7), **characterised in that** the combustion engine (7) is designed as a gas engine and the straddle carrier (1) has an electronic control unit (15) for controlling the energy flow, and a first inverter (11) of the first power unit (52) is in communication contact with the electronic control unit (15) via a field bus (14).

2. Straddle carrier (1) according to Claim 1, **characterised by** a fuel tank (9) for cryogenic liquid gas, in particular liquid natural gas, which is connected to a heat exchanger (22) or a condenser (25) via a feed line (10).

3. Straddle carrier (1) according to Claim 2, **characterised in that** the heat exchanger (22) and the condenser (25) respectively are connected to the combustion engine (7) via a gas pipe (48, 59), in particular via a gas mixer (62).

4. Straddle carrier (1) according to one of the above claims, **characterised in that** the at least one electrical drive motor (16, 17, 18) is designed as a travel drive (16) and/or as a lifting drive (17).

5. Straddle carrier (1) according to one of the above claims, **characterised by** a second power unit (53, 49) for generating secondary electrical energy by converting waste heat (21) from the first power unit (52) produced during the generation of the primary electrical energy.

6. Straddle carrier (1) according to Claim 5, **characterised by** a heat exchanger (22) for the coupling of waste heat from the first power unit (52) into the second power unit (53).

7. Straddle carrier (1) according to Claims 5 and 6, **characterised by** a delivery pump (26) for delivering working fluid condensed in a condenser (25) from an expansion machine (23) via the condenser (25) to the heat exchanger (22) of the second power unit (53).

8. Straddle carrier (1) according to Claim 7, **characterised in that** the second power unit (49, 53) is configured as a closed gas turbine process system and, in particular, **in that** helium and/or nitrogen are/is used as the working fluid.

9. Straddle carrier (1) according to Claims 6 and 7, **characterised by** a lubricant separator (27) disposed between the heat exchanger (22) and the expansion machine (23).

10. Straddle carrier (1) according to one of the above claims, **characterised by** at least one energy store (20), in particular in the form of double-layer capacitors, batteries or power storage units, to compensate for energy peaks.

11. Straddle carrier (1) according to Claim 10, **characterised by** a charge/discharge regulator (19) for each energy store (20).

12. Straddle carrier (1) according to one of Claims 5 to 11, if dependent on at least Claim 5, **characterised in that** a second inverter (28) of the second power unit (53) is in communication contact with the electronic control unit (15) via a field bus (14).

13. Straddle carrier (1) according to one of Claims 1 to 12, **characterised in that** at least one travel drive (16), at least one lifting drive (17) and at least one auxiliary drive (18) are in communication contact with the field bus (14).

## Revendications

1. Chariot cavalier (1) destiné au transport et à l'empilage de conteneurs (6) et comprenant
- un palonnier (5) déplaçable verticalement et guidé sur le cadre (4) du chariot cavalier (1),
- au moins un moteur d'entraînement électrique (16, 17, 18) et
- un premier groupe (52) de génération d'énergie électrique primaire destinée à l'au moins un moteur d'entraînement électrique (16, 17, 18),
le premier groupe (52) comprenant un moteur à combustion interne (7) et un générateur de courant (8) relié au moteur à combustion interne (7), **caractérisé en ce que** le moteur à combustion interne (7) est conçu comme un moteur à gaz et le chariot cavalier (1) comporte une unité de commande électronique (15) destinée à commander les flux d'énergie et un premier onduleur (11) du premier groupe (52) est en liaison de communication avec l'unité de commande électronique (15) par le biais d'un bus de terrain (14).

2. Chariot cavalier (1) selon la revendication 1, **caractérisé par** un réservoir de carburant (9) destiné à un gaz liquide cryogénique, en particulier du gaz naturel liquide, qui est relié par une conduite d'alimentation (10) à un échangeur de chaleur (22) ou à un condenseur (25).

3. Chariot cavalier (1) selon la revendication 2, **caractérisé en ce que** l'échangeur de chaleur (22) ou le condenseur (25) est relié au moteur à combustion interne (7) par le biais d'une conduite de gaz (48, 59), notamment par le biais d'un mélangeur de gaz (62).

4. Chariot cavalier (1) selon l'une des revendications précédentes, **caractérisé en ce que** l'au moins un moteur d'entraînement électrique (16, 17, 18) est conçu comme un entraînement de roulement (16) et/ou comme un entraînement de levage (17).

5. Chariot cavalier (1) selon l'une des revendications précédentes, **caractérisé par** un deuxième groupe (53, 49) de génération d'énergie électrique secondaire par conversion ultérieure en électricité de la chaleur perdue (21) du premier groupe (52) qui résulte de la génération de l'énergie électrique primaire.

6. Chariot cavalier (1) selon la revendication 5, **caractérisé par** un échangeur de chaleur (22) destiné à injecter par couplage la chaleur perdue du premier groupe (52) dans le deuxième groupe (53).

7. Chariot cavalier (1) selon les revendications 5 et 6, **caractérisé par** une pompe de transport (26) destinée à transporter un milieu de travail, condensé dans un condenseur (25), d'une machine à détente (23) à l'échangeur de chaleur (22) du deuxième groupe (53) par le biais du condenseur (25).

8. Chariot cavalier (1) selon la revendication 7, **caractérisé en ce que** le deuxième groupe (49, 53) est réalisée sous la forme d'un système de processus à turbine à gaz fermée et en particulier de l'hélium et/ou de l'azote sont utilisés comme milieu de travail.

9. Chariot cavalier (1) selon les revendications 6 et 7, **caractérisé par** un séparateur de lubrifiant (27) disposé entre l'échangeur de chaleur (22) et la machine à détente (23).

10. Chariot cavalier (1) selon l'une des revendications précédentes, **caractérisé par** au moins un accumulateur d'énergie (20), se présentant notamment sous la forme de condensateurs à double couche, de batteries ou d'accumulateurs de courant, destiné à compenser des pics d'énergie.

11. Chariot cavalier (1) selon la revendication 10, **caractérisé par** un régulateur de charge/décharge (19) destiné à un accumulateur d'énergie respectif (20).

12. Chariot cavalier (1) selon l'une des revendications 5 à 11, lorsqu'elle dépend au moins de la revendication 5, **caractérisé en ce qu'**un deuxième onduleur (28) du deuxième groupe (53) est en liaison de communication avec l'unité de commande électronique (15) par le biais d'un bus de terrain (14).

13. Chariot cavalier (1) selon l'une des revendications 1 à 12, **caractérisé en ce qu'**au moins un entraînement de roulement (16), au moins un entraînement de levage (17) et au moins un entraînement auxiliaire (18) sont en liaison de communication avec le bus de terrain (14).
